# EUROPEAN PATENT APPLICATION

(11) **EP 4 772 280 A1**
(43) Date of publication of application: **08.07.2026**
(21) Application number: 25223732.6
(22) Date of filing: 16.12.2025
(51) Int. Cl.: B03C 1/033, B01D 21/26, B03C 1/28, B03C 1/30, B01D 35/02, B01D 35/06, B01D 36/04

(54) **SEPARATOR DEVICE**

(30) Priority: 07.01.2025 GB 202500117
(71) Applicant: Adey Holdings (2008) Limited, Haresfield, Stonehouse GL10 3EZ (GB)
(72) Inventor: Button, Mark, Stonehouse GL10 3EZ (GB); Pathan, Kashem, Stonehouse GL10 3EZ (GB); Weichert, Adrian, Stonehouse GL10 3EZ (GB)
(74) Representative: Noble, Frederick

(57) **Abstract**

Disclosed is a separator device 10 for removing suspended particles from heating and/or cooling system fluid. The separator device 10 comprises a hydrocyclone separator 38, an inlet 24 to the hydrocyclone separator 38, a sediment collection region 78 disposed below an aperture 46 in the hydrocyclone separator 38, a blocking wall 54 across a central part of the top of the hydrocyclone separator 38 to define an outflow annulus, a mesh basket 44, and an outlet 24 from the separator device 10 for returning fluid back to the central heating and/or cooling system circuit. Suspended particles are primarily removed from the fluid by a vortex that establishes in the hydrocyclone separator 38, and remaining particles are captured and retained in the mesh basket 44 disposed above the hydrocyclone separator 38.

## Description

The present invention relates to a separator device and particularly but not exclusively to a separator device for removing suspended particles from central heating and/or cooling system fluid.

### BACKGROUND TO THE INVENTION

Central heating systems typically comprise a circuit including a boiler and multiple heat transfer devices, such as radiators, through which heating fluid, normally water, flows. With use, components like pipes, valves, and radiators corrode, releasing suspended debris into the circulating fluid. This debris is mainly comprised of magnetite (iron-oxide) from the corrosion of ferrous materials. Magnetite accumulates over time, especially as certain components of the heating system, such as radiators, do not get replaced as regularly as others, like boilers. Newly-built heating systems may also acquire debris when under construction.

This debris is problematic and results in functional issues, increasing the strain on the fluid pump and worsening the performance of the heating system. This increases energy consumption for the consumer and leads to potential damage to the boiler and associated components. These issues may be exacerbated in newer types of heating systems like heat pumps and under-floor heating systems as these typically have narrower channels to maximise heat exchanger efficiency. Narrower channels and lower operating temperatures, compared to traditional boilers, increase the risk of blockages and organic debris accumulation, such as biofilm formation. The fluid in these systems should therefore be kept clean to mitigate the aforementioned problems.

One solution to reduce the accumulation of debris is to install a separator device, optimally on the pipe returning fluid to the boiler. Various types of separator device exist, commonly containing a magnet positioned in the path of fluid flow to attract and retain suspended magnetite. These particles remain adhered to the magnet until cleaned off, thus not entering the boiler. Magnetic separators may also contain additional non-magnetic arrangements for particle separation. These include mesh filters, where fluid flows through the mesh and suspended particles become trapped in the mesh.

Similarly, hydrocyclone filters are known, separating solid particles from liquid by using centrifugal forces to increase the settling rate of particles according to their size and specific gravity. In a typical embodiment, liquid swirls on entry of the hydrocyclone and travels down the hydrocyclone in a helical pattern. The speed that the liquid travels at increases as the diameter of the conical hydrocyclone decreases, before reaching the bottom of the hydrocyclone and travelling back up through the centre of the vortex. Particles suspended in the liquid lose inertia as they collide with the sides of the hydrocyclone, falling out of the liquid flow. In this way, large quantities of suspended particles can be removed from a liquid without the need for mesh or magnetic filters.

However, hydrocyclone separators may have low efficiency for very small particles, including some magnetic particles, and require some start-up time for the vortex to properly establish. As many boilers switch on and off with demand, the formation of the vortex inside the hydrocyclone may also fluctuate.

Due to the high economic and environmental cost of magnetic separators made from rare-earth metals, separator devices are becoming increasingly reliant on their non-magnetic components to remove suspended particles. Improving these components' functionality would allow weaker magnets, that are cheaper and constructed with less environmentally-damaging materials, to be used as most suspended particles would be removed prior to reaching the magnets via other means.

It is an object of the present invention to reduce or substantially obviate the aforementioned problems.

### STATEMENT OF INVENTION

According to the present invention there is provided a separator device for removing suspended particles from central heating and/or cooling system fluid in a central heating and/or cooling system circuit, the separator device comprising:
a hydrocyclone separator being defined by a sidewall for guiding fluid flow and containing a vortex, the sidewall having a conical profile at least in part, and the hydrocyclone separator having a relatively narrow lower end having an aperture for discharging separated particles and a relatively wide upper end through which fluid flows out of the hydrocyclone separator;
an inlet into the hydrocyclone separator, positioned below the upper end of the hydrocyclone separator and configured for delivering fluid from the central heating and/or cooling system circuit and setting up a swirl in the hydrocyclone separator;
a sediment collection region below the lower end of the hydrocyclone separator and in fluid connection with the hydrocyclone separator via the aperture in the lower end of the hydrocyclone separator;
a blocking wall disposed across a central part of the upper end of the hydrocyclone separator, to define an outflow area surrounding the blocking wall, between the blocking wall and the sidewall of the hydrocyclone separator;
a filtration component in the form of a basket, the basket having an open end facing the upper end of the hydrocyclone separator, and the basket having mesh sidewall(s); and
an outlet from the separation device for discharging fluid from outside the mesh sidewall(s) of the basket and returning the fluid to the central heating and/or cooling system circuit.

The separator device removes suspended particles from circulating fluid through a dual step filtration method. Firstly, most of the suspended particles are removed in the hydrocyclone separator. Here, fluid travels around the inside of the hydrocyclone in a helical pattern, suspended particles being separated from the fluid flow as the centrifugal forces increase and the suspended particles lose their inertia. Sediment falls out of the fluid flow, through the aperture at the bottom and into the sediment collection region below. Larger, denser particles lose inertia earlier on, falling out of the flow higher up in the vortex than smaller, lighter particles.

The sidewall of the hydrocyclone separator is substantially conical at least in part, but may preferably have a substantially cylindrical inlet stage above the conical section.

The inlet may be positioned to one side of the hydrocyclone, entering the hydrocyclone separator, for example, at a tangent to the sidewall. Having the inlet off-centre in this way initiates a swirl of fluid on entry to the housing. This helps establish the vortex fluid flow. As an alternative, other means of diverting fluid flow to set up a swirl may be provided. For example, a flow diverter may be provided on a substantially radial inlet.

The sediment collection region is disposed beneath the hydrocyclone separator and is an area with little flow. The sediment collection region is wider than the width of the aperture. Once particles separated in the vortex settle here, they will tend not to be disturbed until manually removed.

A central blocking wall disposed across part of the upper end of the hydrocyclone narrows the path of the fluid out of the hydrocyclone. This blocking wall may be in the form of a disc, suspended substantially centrally within a circular outlet. This causes the outflow area of fluid leaving the hydrocyclone to be in the form of an annulus. The blocking wall reduces the area available for fluid to travel out of the hydrocyclone, without also narrowing the outer diameter of the outflow. This ensures that the outlet is large enough to maintain a consistent flow rate while obstructing the fluid flow sufficiently for the vortex to form and particle separation to occur. **It** is advantageous to maintain a larger outer diameter of outflow as this prevents unduly narrowing the diameter of the mesh basket disposed directly above the outflow. A larger mesh basket with a greater mesh surface area can therefore be used, improving post-vortex filtration. By using a central blocking wall, the outflow area can be controlled to ensure effective vortex separation, while keeping the outer diameter of the outflow area, and hence the diameter of the mesh basket, relatively wide.

Any remaining suspended particles exit the hydrocyclone separator at the upper end, through the annular outflow. They then flow into the mesh basket and through the mesh sidewalls of the basket to the outlet. Particles larger than the apertures in the mesh are captured and retained on the inside of the mesh basket and thus prevented from leaving the separator device and traveling back to the boiler.

Optimally, the vortex acts as the primary filtration method, removing most of the suspended particles from the fluid, including small magnetic particles.

**It** is envisioned that the secondary filtration component, the mesh basket, is primarily needed during the first pass of fluid during times when the vortex is not fully established, i.e. when the heating pump is first switched on. As most of the particles have been removed prior to reaching the mesh, it is unlikely that the apertures in the mesh become blocked in-between cleaning.

As described in more detail below, in some embodiments a magnet is provided. The combination of the magnet and the mesh basket provide for effective separation when the vortex is not yet established.

The diameter of the apertures in the mesh may be approximately 300 microns.

Where a magnet is provided, the mesh and magnet in combination provide for collection of particles when the vortex is not yet fully established. Advantageously, a mesh size of (say) 300 microns may effectively collect larger particles, while the magnet may collect smaller lighter magnetic particles.

A mesh size of around 300 microns is found to offer effective protection, especially for heat pumps which are susceptible to damage from larger particles. Particles of this size are often present in systems in the form of residual building dirt, e.g. brick dust, left over from installation of the system. A mesh size of 300 microns with a sufficient surface area can be made to ensure that the mesh does not overly obstruct fluid flow, ensuring that a stable flow rate to maintain the vortex is provided. Additionally, ensuring a faster flow rate mitigates excess strain on the pump, helping extend the life of the pump and ensuring that the heating and/or cooling system can function efficiently as designed.

The diameter of the apertures of the mesh may be altered depending on the type of heating system being protected. For instance, a boiler heat exchanger with micro channels may be more susceptible to damage from smaller particles that are not trapped by a larger mesh, so the mesh size may be decreased for this application.

A housing in the form of a hollow cylinder may be provided. This holds all the internal components of the separator device and may include an open top end with a removable closure for closing the open top end. A drain plug may be provided in the floor of the housing. In one embodiment, a step may be disposed part of the way up the housing from the floor, separating a slightly narrower and slightly wider section of the housing.

An insert may be provided, disposed inside the housing. The insert provides in particular the conical sidewall forming the hydrocyclone. The insert may include a section having a cylindrical sidewall, above the conical sidewall section. A skirt may substantially surround the insert, connected to the top edge of the sidewall of the insert via a rim, and extending downwardly, substantially parallel to the cylindrical sidewall and outwardly spaced from the cylindrical sidewall. This skirt may be integral to the insert or be provided as an attached piece. The bottom rim of the skirt may rest on a step in the housing. This skirt supports the insert, allowing the aperture in the lower end of the hydrocyclone to be spaced from the floor of the housing, to form a sediment collection region between the bottom of the insert and the floor of the housing.

The rim and the skirt may also act as a barrier, separating the sediment collection region from the post-filtration region. This ensures that none of the fluid from the sediment collection region travels up the exterior side(s) of the insert. Likewise, this barrier would prevent fluid flowing down from the post-filtration region outside the basket into the sediment collection region, instead ensuring the filtered fluid travels out of the separator device via the outlet.

A concentric inlet and outlet to and from the housing may be provided, the outlet disposed around the inlet. The internal inlet extends into the hydrocyclone while the outlet terminates outside the hydrocyclone insert but inside the housing. This ensures the inlet and outlet fluid flow remain separated. Providing a singular concentric inlet and outlet instead of separate components increase the flexibility of installation of the separator device.

A lid may be provided at the top end of the housing. Preferably, the lid is removable. This lid may be connected to the housing with a separate canister locking ring that screws into corresponding threads on the top end of the housing. This provides a water-tight seal. The lid may be removable by unscrewing the canister locking ring and lifting the lid and canister locking ring from the housing. Providing the lid and canister locking ring as separate components ensures that the lid itself does not need to rotate to remove it from the housing. This enables the lid to be removed to access the inside of the housing for maintenance, while not twisting or damaging any of the internal filtration components that may be attached to the underside of the lid.

The blocking wall may be provided as a wall on the underside of a protrusion which extends from the lid down into the housing and is positioned inside the basket. In one embodiment, the protrusion includes a magnetic element. This allows the protrusion to have a dual purpose of reducing the outflow area at the top of the hydrocyclone as well as introducing magnetic filtration to the separator device. A magnetic element inside the mesh basket allows any remaining magnetic particles in the fluid, that have not been removed by the vortex, to be captured and retained on the magnetic element. This would be particularly important during times where the vortex is not fully established, i.e. when the pump is first switched on, where more suspended particles travel into the mesh basket. As any optional magnetic elements would act as a secondary filtration component to the vortex, weaker more cost-effective magnets may be used, compared to separator devices that solely use magnets.

The protrusion may be in the form of a sheath around the magnet. The sheath may be attached to or integrated into the lid, and form part of the pressure envelope of the filter, i.e. the sheath forming a dry pocket extending into the filter, from which the magnet can be removed without depressurising and opening the separator device.

The magnetic element disposed inside the sheath may be provided with a handle at the top of the magnetic element for easy removal. The handle portion of the magnetic element may be located outside of the lid, enabling a user to easily grasp and remove the magnetic element from the housing when necessary.

Any magnetic particles attracted to the magnetic element attach to the exterior of the sheath instead of to the magnetic element itself. Then, during cleaning, the magnetic element is removed, disrupting the magnetic field, and causing the captured particles to fall off the magnet pocket into the sediment collection region. Additionally, the magnet element remains dry, limiting corrosion and degradation of the magnets.

The magnetic element may comprise a substantially cylindrical rod that extends into the separator device, preferably in a position within the mesh basket. This ensures the magnetic element is positioned in the path of fluid flow. Preferably, the magnetic element is disposed in the centre of the mesh basket, with the magnetic element spanning the length of the basket, vertically from the lid to the upper end of the hydrocyclone separator. This disposition maximises the time fluid is in contact with the magnetic element once leaving the vortex, to ensure any remaining magnetic particles not captured by the vortex are removed from the fluid flow.

The magnetic element may comprise at least two substantially cylindrical magnetic billets arranged with like poles facing each other.

Preferably, the width of the mesh basket is narrower than the width of the upper end of the hydrocyclone separator. A wall may be provided in the form of an inwardly-extending flange around the upper end of the hydrocyclone separator to form a shoulder at the upper end of the hydrocyclone separator to meet with the narrower mesh basket. Providing a sharp shoulder at the top of the hydrocyclone is found to improve vortex performance compared to a configuration in the form of a gradual curve.

Preferably, a short solid section of sidewall may be provided at the bottom of the mesh basket, between the mesh sidewall and the upper end of the hydrocyclone separator. Together with the walls of the protrusion (e.g. the magnet sheath) this helps to define a channel through which water flows out of the hydrocyclone separator into the mesh separation stage and the outflow area.

The mesh basket is preferably substantially cylindrical with a single curved sidewall, but in other embodiments may be, for example, octagonal or hexagonal, having a number of flat sidewalls.

Preferably, a removable drain valve may be provided in the base of the housing. This allows the fluid and sediment in the sediment collection region to be removed from the housing without having to detach the housing from the pipe of the central heating and/or cooling system.

A bleed valve may also be provided to release air and pressure in the housing prior to cleaning and maintenance. The bleed valve may be provided as part of a removable magnet pocket as explained in further detail below.

Optimally, the separator device is positioned on the pipe returning fluid to the boiler. This ensures that any suspended particles in the circulating fluid are removed prior to reaching the boiler, where they would cause damage.

According to a second aspect of the invention, there is provided a separator device for removing suspended particles from central heating and/or cooling system fluid in a central heating and/or cooling system circuit, the separator device comprising:
a housing, having an inlet and an outlet for connection to the central heating system circuit, a fluid flow region within the housing, and an aperture in the housing for receiving a removable magnet pocket;
a removable magnet pocket in the form of a hollow tube with a first closed end and a second open end, the first end being insertable into the fluid flow region in the housing via the aperture in the housing and the second end remaining outside the housing; and
an attachment means for releasably fixing the magnet pocket to the housing and sealing between the magnet pocket and the housing.

The hollow tube inserted into the housing of a separator device creates a dry pocket extending into the housing. This is advantageous as elements that need to remain dry, such as magnets, can be inserted into the dry pocket to be in the path of fluid flow inside the housing while staying dry and easily removable from said housing. The magnet is protected from the fluid inside the housing, which avoids premature corrosion of the magnet.

Also, the magnet can be removed from the pocket, and fluid can then be drained from the filter, to clean the filter without having to scrape debris from the surface of the magnet. In different embodiments, the debris and fluid may be drained from the filter either by a separate drain aperture, or another removable lid or closure, or by removing the magnet pocket to use that aperture to drain the filter.

As the magnet pocket is independently removeable from the housing, it provides easy access to the interior of the housing. This access is advantageous for multiple maintenance and monitoring purposes such as for adding chemicals to the central heating and/or cooling system and taking samples while the separator device is connected.

A magnet, when inserted into the pocket, provides separation means. Magnetic iron oxide particles will attach to the outside of the magnetic pocket, inside the filter. The hollow housing may contain additional filtration components such as a mesh filter or a hydrocyclone separator.

The magnet pocket may be disposed in an aperture in the lid to the housing. It may be screwed into the lid via corresponding threads and be independently removeable from the housing to the lid. This would allow entry to the housing for purposes such as adding chemical treatments, without disconnecting the separator device or opening the lid.

The removable magnet pocket may be used as a bleed valve, so that slightly loosening the magnet pocket in the lid releases air and pressure within the housing prior to cleaning or maintenance. This may avoid the need to provide a separate bleed valve, reducing the build cost of a filter according to the invention.

The screw thread on the magnet pocket may be provided with a slot, to allow air to bleed through the thread when the magnet pocket is partially unscrewed, so that it is no longer sealed, but still retained to the housing.

The removable magnet pocket in this way provides a combined bleed valve, dosing point and magnet pocket in a single fitting. This significantly reduces the cost of the filter compared to products which use a separate bleed valve.

A magnetic element may be provided inside the magnet pocket. The aperture at the open end of the magnet pocket may allow the insertion of a magnetic element. The magnet pocket may act as a sheath for the magnetic element. This enables the magnetic element to extend into the housing, in the path of fluid flow, without being in contact with the fluid inside the housing. Keeping the magnetic element dry prolongs the lifespan of the magnets, limiting corrosion. It also makes cleaning off captured magnetic particles easier as the particles are attached to the exterior of the magnet pocket, not the magnetic element itself, and detach when the magnetic element is removed from the pocket.

Preferably, a slot and key arrangement is provided on the magnet and magnet pocket, so that the magnet will only enter the magnet pocket in one orientation.

An eye may be provided at the top of the magnet assembly, and a corresponding eye may be provided on the lid of the separator. This allows the magnet to be retained in the pocket, for example with a cable tie. This prevents casual tampering, and in some embodiments may allow the filter to be fitted in different orientations, i.e. other than with the magnet pocket at the top of the filter.

Preferably, the slot and key arrangement and the eyes are both provided, so that when the magnet is in the correct orientation, ensured by the slot and key, the eyes line up. This also serves as a check that the removable magnet pocket is fully screwed into the housing of the separator.

A handle may be provided on one end of the magnetic element. A handle would be disposed on the end of the magnetic element not inserted into the magnet pocket and would protrude from the housing. This enables the magnetic element to easily be removed from the magnet pocket. Any magnetic debris that has adhered to the exterior of the magnet pocket inside the housing would fall off during cleaning when the magnetic element is removed as there is no more magnetic attraction.

The eye may be provided on the handle of the magnetic element. The key of the slot and key arrangement may be provided extending below the handle, so that it enters the top of the magnet pocket in use.

The portion of the magnetic pocket disposed inside the separator device may be comprised of thicker support bars and thinner areas between the bars. These thinner areas limit attenuation of the magnetic attraction from the magnets, while the thicker bars provide structural support to the magnet pocket.

According to a third aspect of the invention, a fitment is provided for connecting a separator device to a pipe of a central heating and/or cooling system, the fitment comprising:
a body in the form of a tee;
a first aperture for an inlet pipe and a second aperture for an outlet pipe, the first and second apertures facing away from each other in line with each other;
a concentric inlet and outlet disposed on a perpendicular arm of the tee and insertable into the separator device;
at least one valve provided in the body of the fitment, for controlling the flow of fluid to and/or from the connected separator device; and
a first adaptor connected to the first aperture and a second adaptor connected to the second aperture, each adaptor being connected to the body of the fitment via a screw thread, and having a face which abuts a corresponding face of the body when the adaptor is connected to the body, the adaptors connecting the fitment to the inlet and outlet pipes,
in which the faces of the fitment apertures include angulations in the form of ratchet teeth, and the corresponding faces of the body of the fitment also include angulations in the form of ratchet teeth.

The teeth on the adaptor and fitment aperture correspond with each other and may be formed integrally with the respective components. The angulations of the ratchet teeth may face in opposite directions so that the teeth allow the adaptor to be screwed onto the fitment, but prevent removal once tightened. The ratchet teeth are preferably formed of a series of ramps (at an angle to the direction of travel along the screw thread), and flat faces (substantially parallel with the direction of travel along the screw thread) between the ramps. The series of ramps forms a circle around the corresponding thread and aperture.

The teeth on at least one of the adaptor and fitment aperture are preferably slightly resiliently deformable. When the adaptor is screwed onto the final part of the travel of the screw thread, the teeth will deform slightly as the ramps of the teeth interfere with each other. The deformation allows final tightening of the screw thread. Once the adaptor is fully tight, flat sides of the teeth abut against each other, and it becomes essentially impossible to turn the screw in the other direction. The teeth also resist over-tightening of the adaptor - once the adaptor is correctly screwed onto the fitment, the screw thread will not move any further in either direction.

The teeth may also provide a visual indicator when the fitting has been adequately tightened. There may be an audible click when the corresponding teeth properly connect.

The size of the ratchet teeth (i.e. the total height of each ramp above the face) may be around 0.25mm. For example, the size of the ratchet teeth may be between 0.15mm and 0.35mm.

The body may be made from plastics, for example, glass-reinforced nylon.

The adaptors may be made from metal, for example, brass.

Producing the adaptors from metal allows them to be made compatible with a range of conventional plumbing fittings. For example, in one embodiment, the side of the adaptor which connects to the pipe includes a seat and external screw thread forming part of a standard compression fitting. Making the body of the fitment from plastics reduces material cost as compared to known brass fitments. Using an appropriate grade of plastic can provide the level of resilient deformability required for the teeth to work and allow the adaptor to be screwed on and then prevent further movement of the screw thread in either direction.

Preferably, a first ball valve may be provided in the inlet and a second ball valve may be provided in the outlet.

The fitment is a single piece that connects the separator device to the pipes of the central heating and/or cooling system. The fitment includes a concentric inlet and outlet that extends into an attached separator device that is comprised of an inner and an outer pipe, the inner pipe positioned within the outer pipe. The inner pipe acts as an inlet for the fluid from the central heating and/or cooling system to enter the separator device and the outer pipe acts as an outlet for fluid to return to the central heating and/or cooling system post-filtration. Having a single concentric inlet/outlet allows for the separator device to be fitted to a wider range of pipe arrangements and for less alterations to be made to the existing plumbing in the installation process. Therefore, the separator device can be installed in tight spaces with limited accessibility where installation would otherwise not be possible.

The flow of fluid to and from the separator device is controlled by the ball valves disposed in the inlet and outlet inside the fitment. These allow independent control of the flow of fluid into and out of the separator device for cleaning and maintenance purposes.

The adaptors provided on the fitment are advantageous as they enable the fitment to be installed on pipes commonly used in plumbing, such as on 22mm copper pipes. The adaptors provide the interface between the copper pipes of the heating and/or cooling system and the plastic body of the fitment, ensuring an adequate connection between the two components.

Preferably, the adaptors are screwed into the fitment via left-handed threads. This is advantageous where the connection to the pipe (e.g. a compression fitting) uses a conventional right-handed thread. The opposing threads prevent the adaptors from coming undone from the fitment while trying to tighten the compression fitting during the installation process. This ensures the fitment and separator device installer, or any subsequent heating engineers, do not accidently remove the adaptors from the fitment. In addition, the ratchet teeth prevent the fitment from being overtightened onto the fitment, and protect the plastic body of the fitment from deformation which could be caused by overtightening. Once the ratchet teeth have engaged with the adaptor in the correct position against the fitment, it cannot be further rotated in either direction. This protects the assembled product from damage which may be caused by torque being applied, for example when tightening or removing compression fittings.

One end of each of the adaptor and fitment aperture have a flat face orientated towards each other, with the corresponding faces facing each other and being in contact when the adaptor and fitment are screwed together. These faces may be in the form of a flange extending from the adaptor and fitment aperture respectively and increase the surface area of the join between the two components.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a view from one side of the separator device according to the invention, which is attached to part of a central heating and/or cooling system;
Figure 2 is a plan view from above of the separator device of Figure 1;
Figure 3 is a perspective view of the internal filtration components attached to the lid of the separator device in Figure 1;
Figure 4 is a perspective view of the magnetic element and mesh basket of the separator device of Figure 1;
Figure 5 is a perspective view of the underside of Figure 4;
Figure 6 is a perspective view of a magnetic element inside a magnet pocket;
Figure 7 is a perspective view of the magnetic element outside the magnet pocket;
Figure 8 is a view of the valve and pipe arrangement supplying the separator device in Figure 1;
Figure 9 is a cross-section of the separator device of Figure 1, sectioned through the centre of the hydrocyclone separator;
Figure 10 is a cross-section through the separator device of Figure 1, sectioned through the centre of the concentric inlet and outlet;

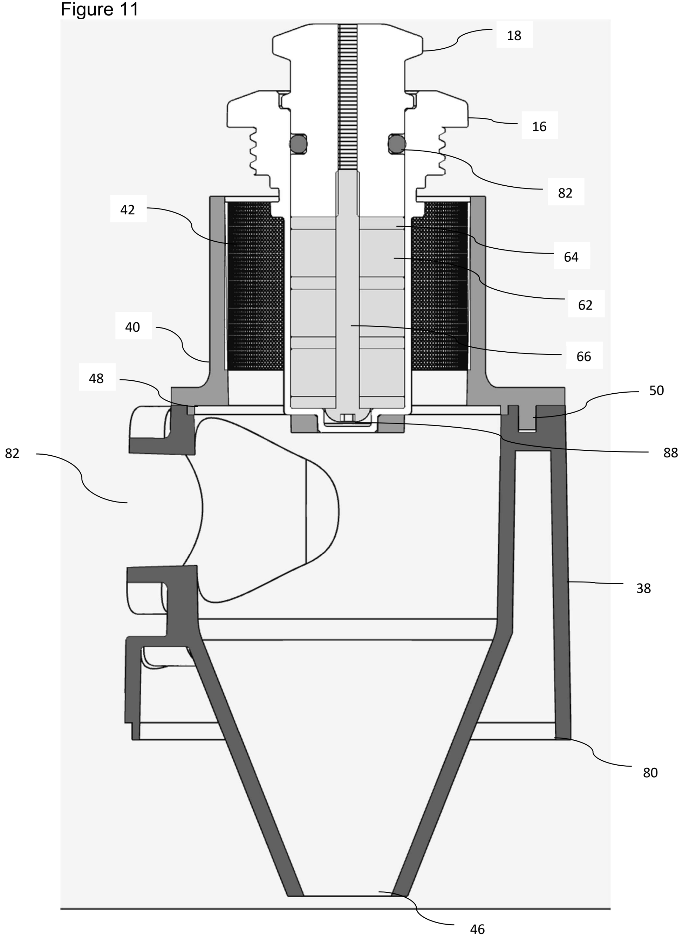

Figure 11 is a cross-section through Figure 3;
Figure 12 is a cross-section of the lower half of Figure 8;
Figure 13 is a perspective close up of the ratchet teeth disposed of on the inlet fitment aperture and adaptor;
Figure 14 is a view from in front of another embodiment of a separator according to the invention;
Figure 15 is a perspective view of a magnet pocket, forming part of the separator of Figure 14; and
Figure 16 is a perspective view of a magnetic element, forming part of the separator of Figure 14.

### DESCRIPTION OF PREFERRED EMBODIMENTS

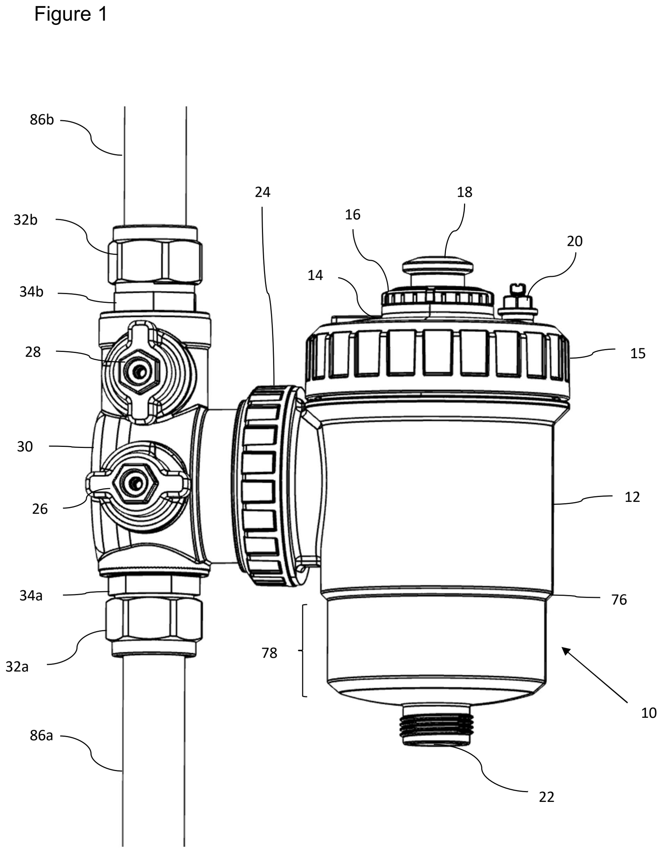

Referring firstly to Figure 1, a separator device for removing and retaining suspended particles from heating and/or cooling system fluid is generally indicated at 10. The separator device 10 is shown *in situ,* connected to the pipes of the central heating and/or cooling system, optimally attached to the return pipe, close to the boiler.

Externally, the separator device 10 is comprised of a housing 12 to house all the internal components of the separator device 10, an aperture 24 for the concentric inlet/outlet and a lid 14. The housing 12 is in the form of a hollow cylindrical container that is open at the top end and includes a narrower lower portion and a wider top portion. The decrease in diameter of the housing is demarcated by a step 76 in the housing 12. The sediment collection region 78 is disposed in the lower portion of the housing 12, positioned between the floor of the housing 12 and the step 76 in the housing 12. A drain plug 22 is provided at the base of the housing 12 to empty the housing 12 for maintenance.

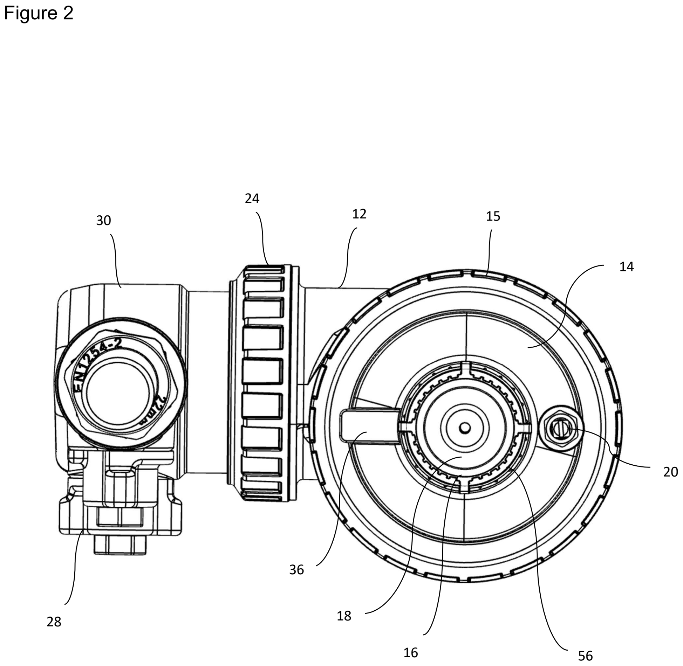

The inlet/outlet aperture 24 is set off-centre to one side of the housing 12, as seen in Figure 2. This helps initiate the rotational flow the fluid needs to begin a vortex, on entry of the fluid into the separator.

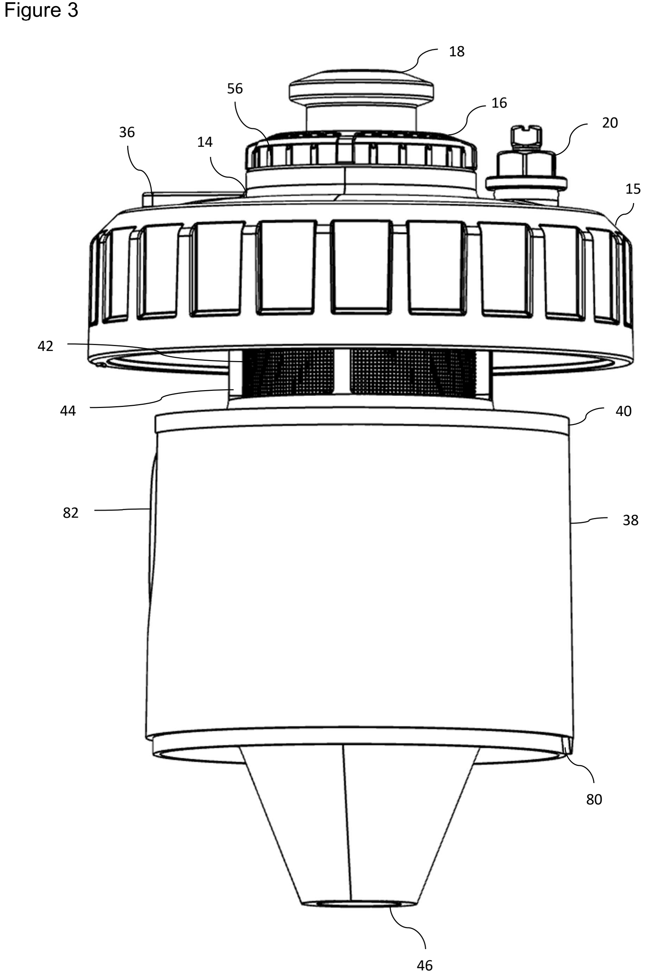

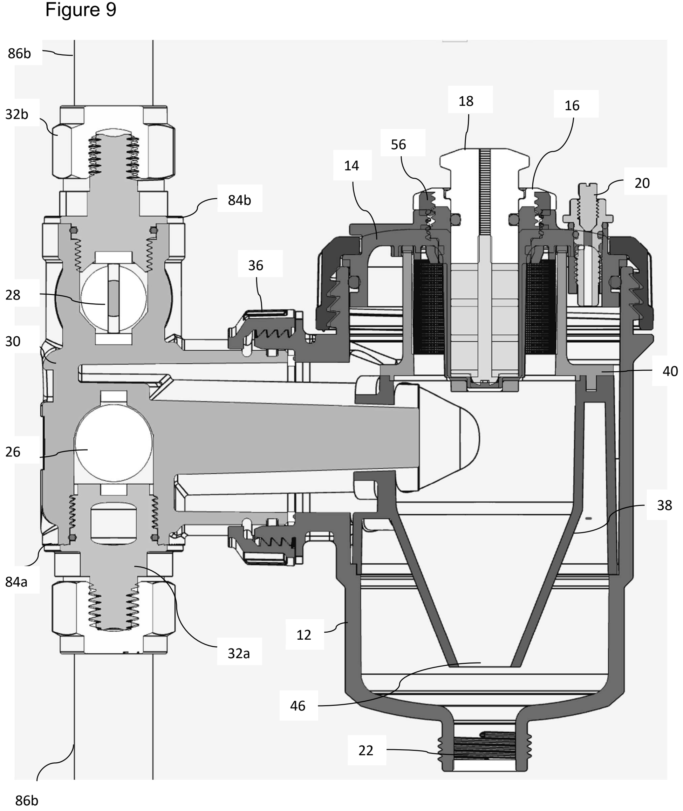

Still referring to Figure 2, the lid 14 is placed over the aperture at the top of the housing 12, with a ridge wider than the diameter of the aperture holding the lid 14 in place. The lid 14 is then secured to the housing 12 by screwing on a canister locking ring 15 to the corresponding threads at the top of the housing 12. An O-ring is provided between the part of the lid 14 that is inside the housing 12 and the housing 12 to ensure a water-tight seal (see Figure 9). The canister locking ring 15 is removed along with the lid 14 when unscrewed and is prevented from being removed separately by a protrusion 36 on the lid 14 that extends partly over the top of the canister locking ring 15, holding it in place (Figure 3).

On the top of the lid 14, a bleed valve 20 is provided to release pressure inside the housing 12 prior to maintenance or cleaning.

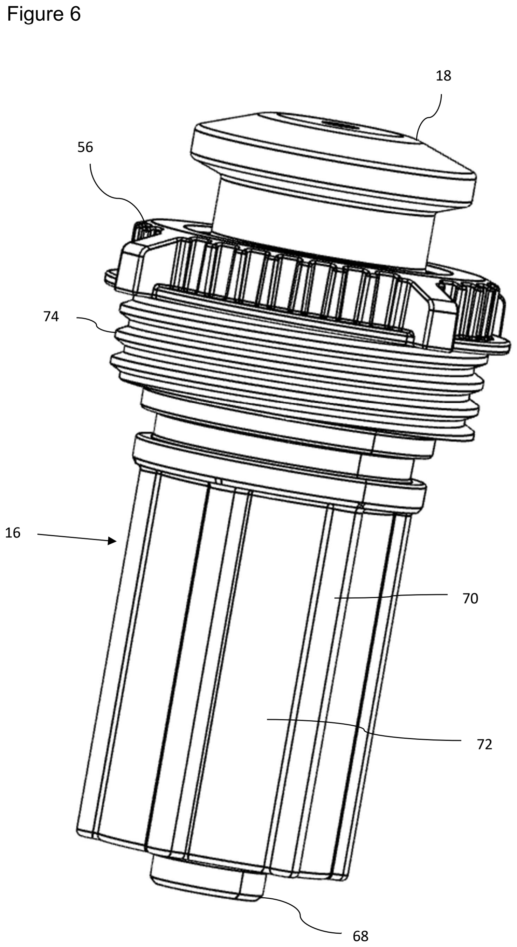

Referring now to Figure 6, a magnet pocket 16 is provided. The magnet pocket 16 is screwed into a through aperture in the centre of the lid 14, with part of the pocket 16 protruding out of the top of the lid 14 and the majority descending into the housing 12. The exterior part of the magnet pocket 16 includes threads 74 for securing the magnet pocket 16 into the aperture in the lid, the aperture in the lid having a corresponding internal thread. The portion of the magnet pocket 16 that protrudes from the lid 14 includes castellations and grips 56 to provide better grip when screwing and unscrewing the magnet pocket 16.

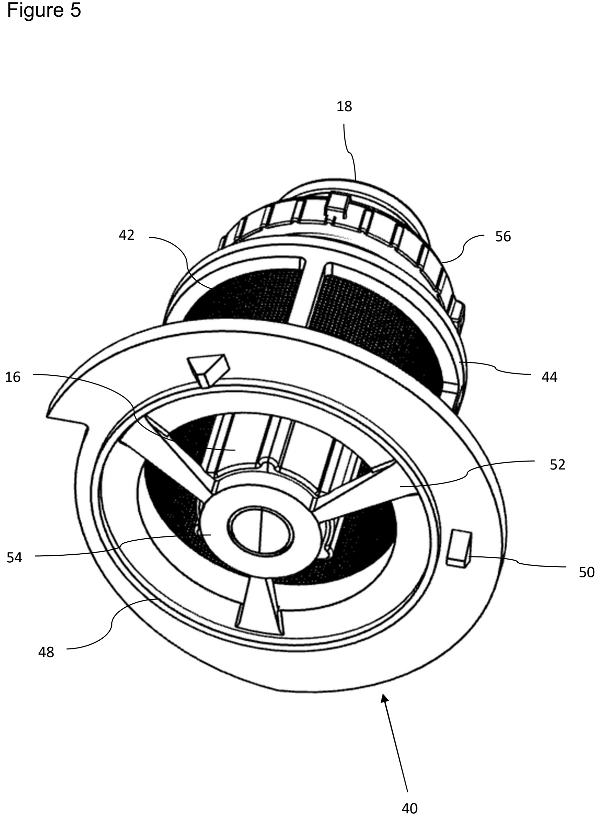

The portion of the magnet pocket 16 below the threads 74 in Figure 6 is positioned inside the housing 12 when installed. The magnet pocket 16 is closed on all sides other than the opening at the top for the magnetic element. Provided are integral vertical bars 70 comprised of thicker plastic to provide structural support. In between these bars 70, thinner sections 72 of the pocket 16 allow the magnetic forces from the magnetic element to work unobstructed. At the bottom of the magnet pocket 16, a central protrusion 68 is provided that locates the magnet pocket 16 to a corresponding inner ring 54 of the hydrocyclone lid 40 (see Figure 5).

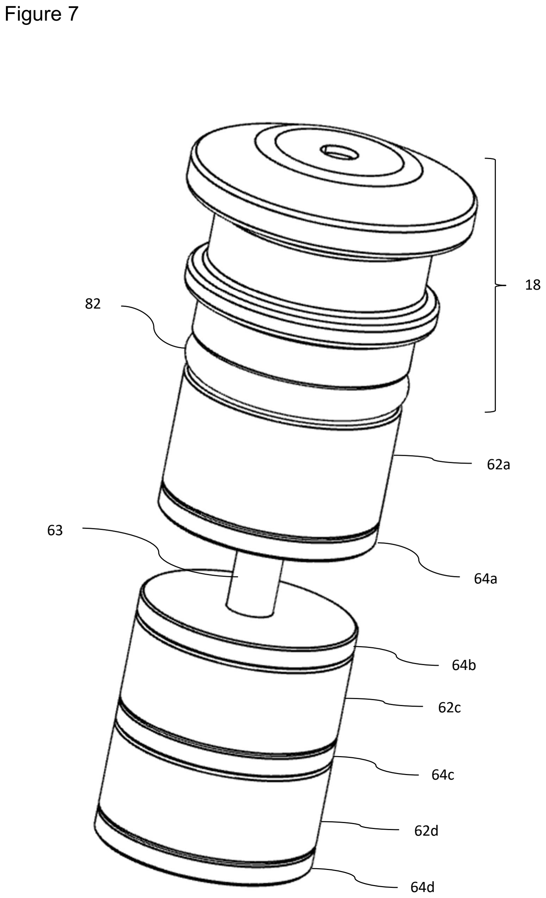

The magnetic element is placed inside the magnet pocket 16, with a handle 18 allowing the magnetic element to easily be removed from the magnet pocket 16 without unscrewing the lid 14. The magnetic element is shown in Figure 7 and comprises a magnet handle 18 and a rod 63 inserted into said handle 18. Magnetic billets 62a-d are provided along the rod 63, inserted onto the rod 63 via apertures in the billets 62a-d. One magnet (62b) is omitted in the illustration so that the rod 63 underneath is visible. Optimally, the billets 62a-d are orientated on the rod 63 so that like poles face each other, for example north and north face each other between two magnets. The magnet billets 62a-d are spaced apart by washers 64a-d provided on the rod 63. The rod 63 is wider at the end opposite the handle 18, like the head of a screw, to prevent the billets 62a-d and washers 64a-d from sliding off.

Figure 3 shows the separator device 10 with the housing 12 removed. Here, a hydrocyclone insert 38 is provided, forming the main filtration component of the separator device 10. The hydrocyclone insert 38 is partly conical with an extended skirt surrounding the central cone. An aperture 46 at the base of the cone is provided to allow sediment to fall into the sediment collection region 78 of the housing 12 (not shown). The hydrocyclone 38 is positioned in the middle of the housing 12, with an aperture 82 in its side acting as an inlet for fluid to enter the hydrocyclone 38. The hydrocyclone 38 is not in contact with the interior sidewall(s) of the housing 12, instead connected to the housing by the edge of the skirt 80 that rests on a corresponding ridge 76 of the housing 12 above the sediment collection region 78. The top end of the hydrocyclone 38 is open.

A lid 40 is disposed on top of the open end of the hydrocyclone 38. The hydrocyclone lid 40 consists of an outer and inner 54 circular ring connected by support pieces 52 to secure the inner ring 54 in the centre of the outer ring. The aperture between the inner 54 and outer ring define an annular outflow area for fluid to pass through when leaving the hydrocyclone 38. The outer ring of the lid 40 has a shoulder 48 that rests on top of the hydrocyclone 38. This connection is located by two small protrusions 50 on the underside of the outer ring that fit into corresponding apertures in the top of the hydrocyclone 38 (Figure 5). The outflow area defined by the lid 40 has a smaller area for fluid to flow through than the top portion of the hydrocyclone 38. This helps in maintaining a vortex in the hydrocyclone 38 below, ensuring adequate particle separation.

The inner ring 54 is disposed slightly lower than the outer ring so that it extends into the hydrocyclone 38 below. The inner ring 54 does not extend below the top of the inlet aperture 82 to the hydrocyclone 38. When fully assembled, the aperture in the centre of the inner ring 54 is blocked by the base 68 of the magnet pocket 16. Fluid therefore only travels through the annulus between the two concentric rings of the hydrocyclone lid 40. This provides enough space for water to flow unimpeded to ensure good flow rates while narrowing the diameter of the outer ring to create finer particle separation in the vortex below.

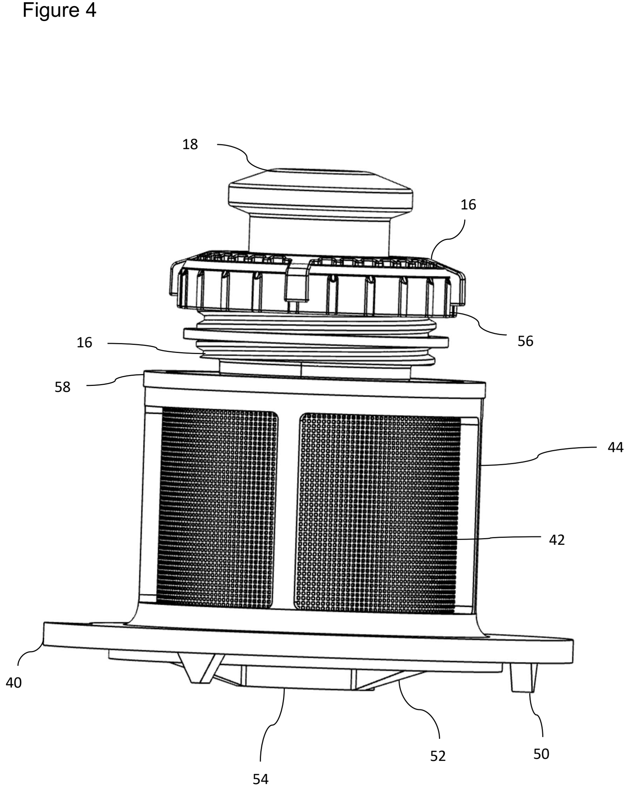

A cylindrical mesh basket is provided directly on top of the hydrocyclone lid 40 and comprises a tube of mesh 42 surrounded by evenly spaced vertical bars 44 to provide structural support to the mesh 42 (Figure 4). The apertures in the mesh 42 may be around 300 microns in diameter and are intended to capture and retain any remaining suspended particles not separated by the vortex or magnet, that are large enough to cause potential damage to the boiler and associated components. It is envisioned that the mesh 42 is unlikely to become obstructed between regular cleanings as most of the suspended particles large enough to be trapped by the mesh 42 would have been removed from the fluid prior to reaching the basket 44.

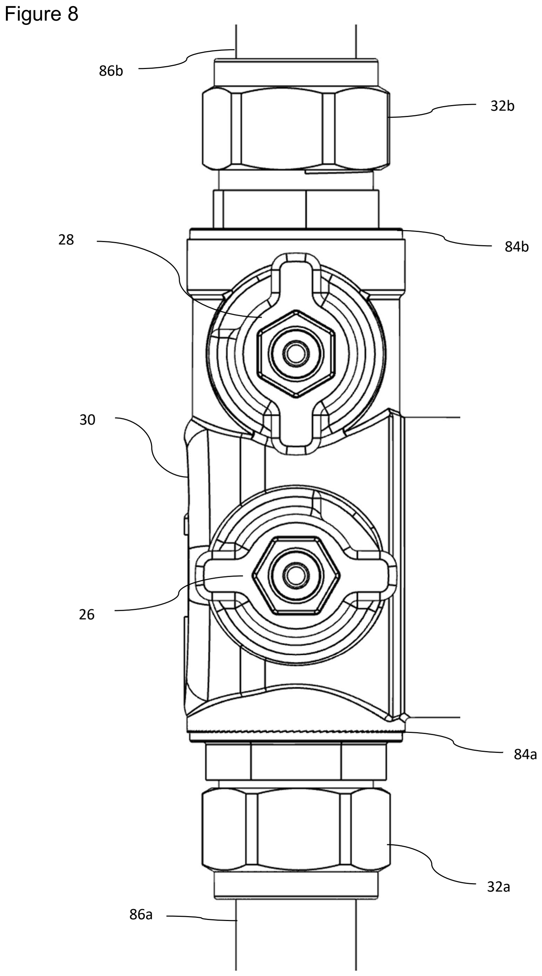

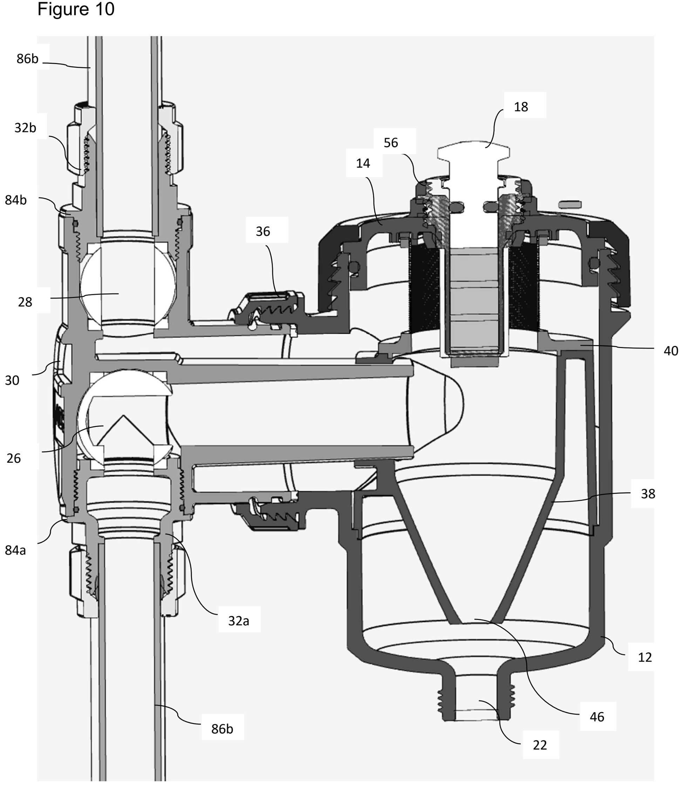

A fitment 30 is provided to connect the separator device 10 to the pipes of the central heating and/or cooling system (Figure 8). The fitment 30 is in the form of a tee, with first and second apertures facing away from each other and in line with each other, for connecting to the inlet pipe 86a and outlet pipe 86b of the central heating and/or cooling system, and a concentric inlet/outlet arrangement on the perpendicular arm of the tee that is inserted into the separator device 10. The fitment 30 is optimally made from rigid plastic, for example glass-reinforced nylon. This arrangement is shown most clearly in Figure 10.

The concentric inlet/outlet arm of the fitment 30 extends into the housing 12 and is held in place by a threaded ring 36 that holds the fitment 30 in place in an aperture 24 in the housing 12. The fitment 30 includes a concentric inlet and outlet, comprised of an inner and outer pipe, with the inner pipe positioned within the outer pipe. The inner pipe acts as an inlet for fluid from the heating and/or cooling system to enter the separator device 10 and the outer pipe acts as an outlet for the fluid to return to the heating and/or cooling system post filtration. The inner pipe extends beyond the outer pipe into the aperture 82 in the side of the hydrocyclone insert 38 to directly deposit fluid into the hydrocyclone insert 38 and keep the pre- and post-filtration regions separate. Having a single concentric inlet/outlet 30 allows for the separator device 10 to be fitted to a wider range of pipe arrangements and for less alterations to be made to the existing plumbing in the installation process.

Inside the fitment 30, there is provided an inlet valve 26 and an outlet valve 28. These are in the form of ball valves and are positioned in the path of each of the inlet or outlet pipe of the fitment 30 to control the flow of fluid in and out of the separator device. The handles of the valves are shown in Figure 8.

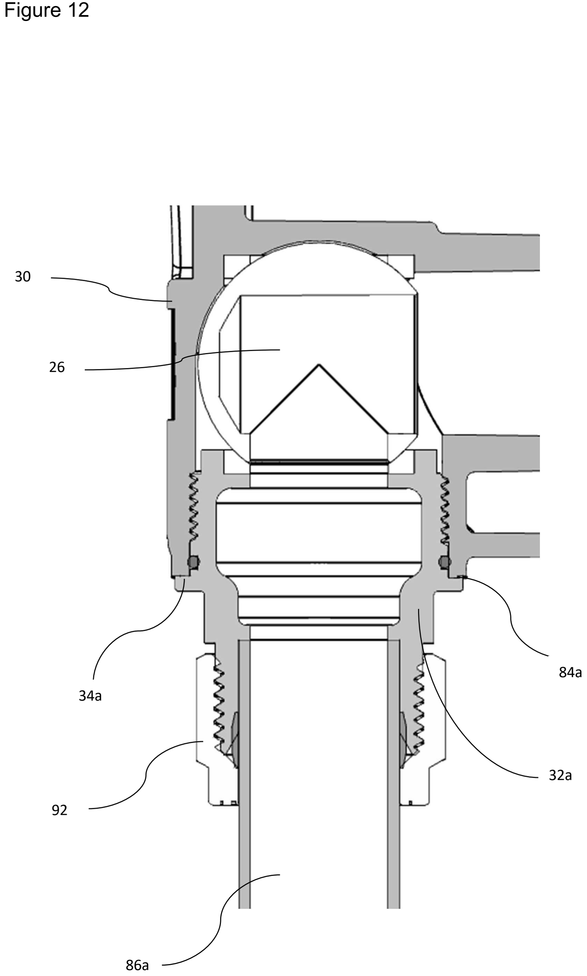

An adaptor 32 is provided to attach the fitment 30 to each of the pipes of the central heating and/or cooling system. Each adaptor 32 is in the form of a brass insert, having threads at both ends and a flange disposed in the middle of the insert that forms a face 34 opposing the face of the aperture on the fitment 30. Figure 12 shows this connection for the inlet portion of the fitment 30 and this is mirrored for the outlet.

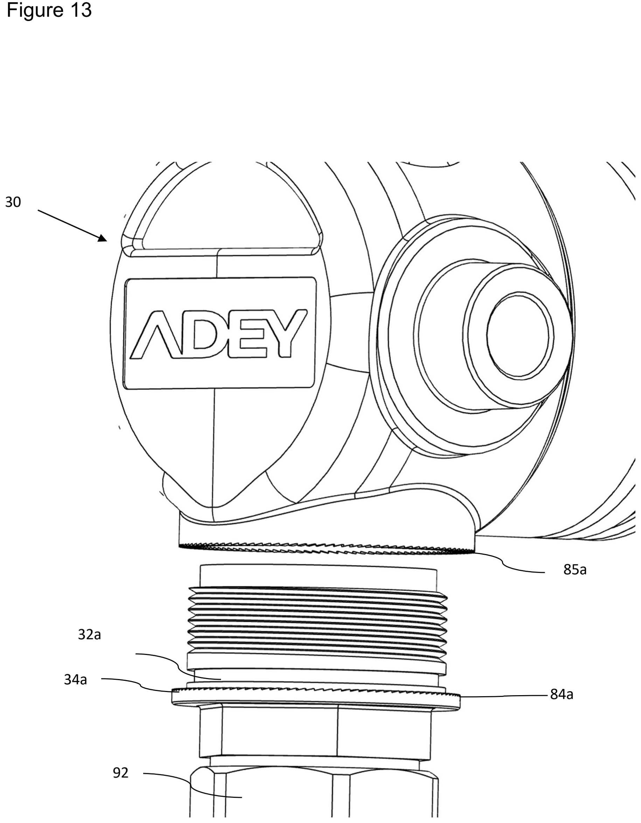

An adaptor 32a joins the fitment 30 and inlet pipe 86a together and spans both components internally (Figure 12). The adaptor 32a enables the fitment 30 to be connected to a pipe of the central heating and/or cooling system, in the case of Figure 12 and 13, the inlet pipe 86a. The inlet pipe 86a is connected to the adaptor 32a by a compression fitting, which includes a union nut 92 with a conventional right-handed thread. The other end of the adaptor 32a is connected to the fitment 30 via a left-handed thread. The opposing threads prevent the adaptor 32a from coming undone from the fitment 30 when opposing turning forces are applied to tighten the compression fitting. Additionally, the portion of the adaptor 32a inside the fitment 30 holds the ball of the inlet valve 26 inside the fitment 30 in a corresponding spherical aperture. It is prevented from leaving this aperture by the top of the adaptor 32a that traps the inlet valve 26 in its compartment.

Figure 13 shows how the adaptor and fitment join, with the components shown as separated. The opposing faces on the adaptor 32a and fitment 30 aperture are provided with teeth. The fitment aperture teeth 85 and adaptor teeth 84 are angulations that are internal to these components. The angulations on the teeth point in opposite directions between the two components so that when a correct seal between the fitment 30 and adaptor face 34 is achieved, the teeth 84/85 sit flush against each other. Optionally, glue may be added to the teeth 84/85 on assembly, to ensure a tight seal and prevent accidental loosening or removal. When tightening, the teeth 84 on the adaptor face 34 and teeth on the fitment aperture 85 of can glide over each other until they reach the correct position. Once in place, the teeth 84/85 prevent the two components from unscrewing as the angulations would press against one another. The teeth 84/85 also prevent excessive tightening, which may compress the inlet or outlet valve 26, 28 and permanently damage the fitment.

When the separator device 10 is in use, fluid returning to the boiler is diverted to the separator device 10 through the inlet pipe 86a. Fluid flows through the open inlet valve 26 inside the fitment 30 and enters the housing 12 via the inner tube of the concentric inlet, visible in Figure 10. Fluid is directly deposited into the hydrocyclone insert 38 at a tangent to the cylindrical wall to introduce a swirl in the fluid and begin the rotational force needed for a vortex to establish.

Fluid continues to swirl round the inside of the hydrocyclone insert 38, speeding up as the fluid travels downwards and the hydrocyclone's 38 diameter narrows in the conical section. Once a vortex is established, fluid travels in a helical pattern, swirling downwards to the bottom of the hydrocyclone 38 before traveling straight up through the middle of the vortex and leaving the hydrocyclone 38 via the hydrocyclone lid 40. Particles suspended in the fluid have too much inertia to follow the tight flow of fluid as the hydrocyclone's 38 diameter narrows. Particles collide with the inside wall and fall out of the fluid flow through the aperture 46 at the bottom of the hydrocyclone 38 and settle in the sediment collection region 78 at the base of the housing 12. This region has very low flow so once sediment is collected here it will remain undisturbed until cleaned. Heavier, denser particles are removed from the fluid flow higher up in the vortex and smaller, lighter particles further down as the diameter narrows. Particles separate according to density as the centrifugal force of the vortex accelerates the settling rate of the particles. Optimally, most of the suspended particles are removed from the fluid at this stage, once the vortex is properly established.

Fluid rises out of the hydrocyclone 38 and up through the apertures in the hydrocyclone lid 40. The inner ring 54 of the lid 40 protrudes slightly into the centre of the vortex flow. The apertures of the lid 40 allow adequate fluid to pass through them maintain a good flow rate, while the inner ring 54 and protruding magnet pocket 16 sufficiently narrows the diameter of the outflow area to allow for finer particle separation. This improves the performance of the vortex.

Fluid then enters the mesh basket 44 positioned on top of the hydrocyclone lid 40, encountering the magnet element disposed inside the magnet pocket 16, positioned in the centre of the mesh basket 44. Any remaining suspended magnetic particles that have not been removed in the vortex are attracted to the magnet billets 62 and are retained on the exterior of the magnet pocket 16 until cleaned.

Lastly, the fluid passes through the mesh 42 of the basket 44. Optimally the apertures in the mesh 42 are around 300 microns in diameter. The mesh 42 acts as the final filtration component of the separator device 10 and captures and retains any remaining suspended particles larger than 300 microns that were not removed from the circulating fluid in the vortex or by the magnetic element.

The mesh 42 and magnetic element act as secondary filtration components to the vortex. Optimally, most of the suspended particles, including magnetic particles, are removed from the fluid in the vortex before entering the basket 44. The magnetic element and mesh 42 capture and retain any remaining suspended particles that were not removed by the vortex. These components will mainly be needed when the vortex is not yet fully established, i.e. when the central heating system pump is first switched on after a period when the heating has been off.

Once the fluid has passed through the mesh 42 into the post-filtration zone at the top of the housing 12, the fluid travels out of the housing 12 via the outlet in the fitment 30. The fluid then flows past the open outlet valve 28 and back to the boiler via the outlet pipe 86b.

During cleaning and for routine maintenance, the inlet and outlet valves 26, 28 are closed to isolate the separator device 10 from the heating and/or cooling system. Pressure is released from the housing by opening the pressure valve 20 positioned in the lid 14. The magnetic element is removed from the magnet pocket 16 by pulling the magnetic element out of the magnet pocket 16 by its handle 18. The lid 14 and magnet pocket 16 remain attached to the housing 12. Any magnetic particles captured and retained on the exterior of the magnet pocket 16 inside the basket 44 are released once the magnetic element is removed and fall through the aperture 46 at the bottom of the hydrocyclone 38, to settle, along with the particles separated by the vortex, in the sediment collection region 78. The drain plug 22 is opened to allow the fluid and sediment to flow out of the housing 12. The outlet valve 28 can be briefly opened while the drain plug 22 is open to flush fluid through the mesh 42 in the opposite direction it normally flows. This helps dislodge any captured particles on the inside of the mesh 42. The drain plug 22 and bleed valve 20 are then closed and the magnetic element reinserted into the magnet pocket 16. The inlet and outlet valves 26, 28 are then opened to re-establish fluid flow to the separator device 10. In this way the separator device 10 can be cleaned without disconnecting the housing from the heating and/or cooling system.

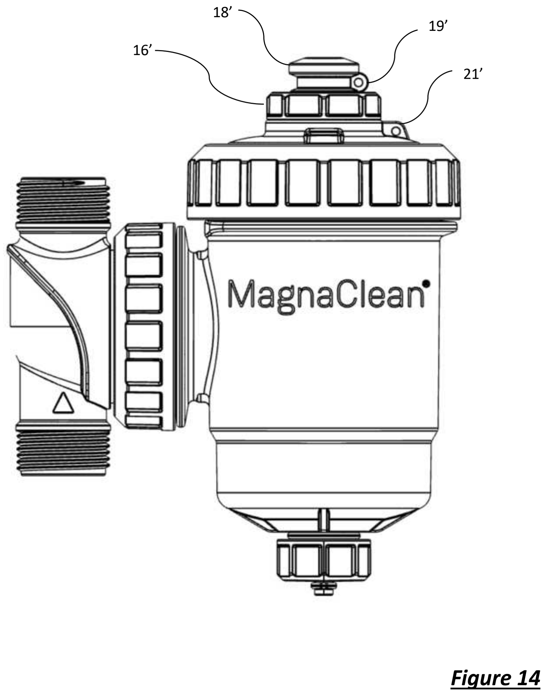

Referring now to Figure 14, Figure 15 and Figure 16, another embodiment is shown, which has slightly different details on the magnetic element and magnetic pocket. In this embodiment, the magnet pocket is indicated at 16' and the handle of the magnetic element at 18'. An eye 19' is provided on the handle 18' of the magnetic element and a further eye 21' is provided on the housing. As shown in Figure 14, the eyes 19', 21' line up when the magnetic element is inserted into the pocket, and can be used to retain the magnetic element in place, for example with a cable tie.

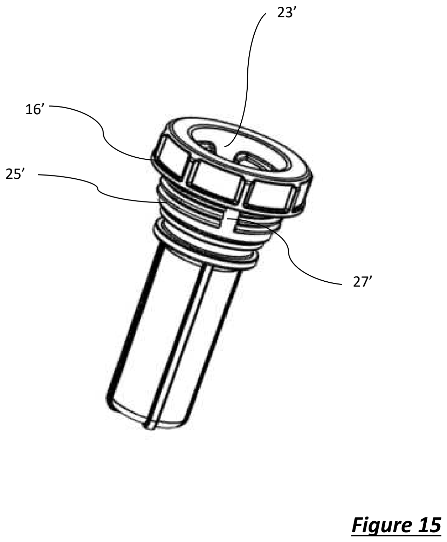

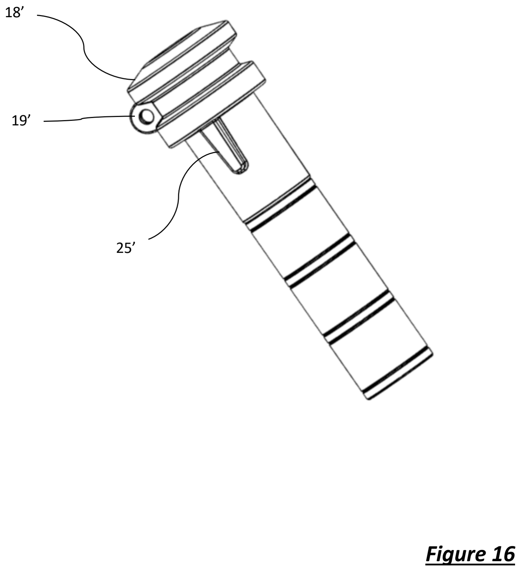

Figure 15 shows the magnet pocket 16' in more detail. In particular, a slot running down the inside of the pocket is indicated at 23'. The slot corresponds with a key (25', Figure 16) extending just below the handle 18' of the magnetic element.

Also seen in Figure 15 is the external thread 25' of the magnet pocket, used to secure the magnet pocket to the housing of the separator. The thread 25' is interrupted by a slot 27', which extends longitudinally across the thread. The slot 27' allows air to bleed out of the separator housing, when the magnet pocket is loosened enough that it does not seal, but is still retained in place.

The embodiments described above are provided by way of example only, and various changes and modifications will be apparent to persons skilled in the art without departing from the scope of the present invention as defined by the appended claims.

### INVENTIONS

Aspects of the invention disclosed herein are set out below:
1. A separator device for removing suspended particles from central heating and/or cooling system fluid, the separator device comprising:
   a hydrocyclone separator being defined by a sidewall for guiding fluid flow and containing a vortex, the sidewall having a conical profile at least in part, and the hydrocyclone separator having a relatively narrow lower end having an aperture for discharging separated particles and a relatively wide upper end through which fluid flows out of the hydrocyclone separator;
   an inlet into the hydrocyclone separator, positioned below the upper end of the hydrocyclone separator and configured for delivering fluid from the central heating and/or cooling system circuit and setting up a swirl in the hydrocyclone separator;
   a sediment collection region below the lower end of the hydrocyclone separator and in fluid connection with the hydrocyclone separator via the aperture in the lower end of the hydrocyclone separator;
   a blocking wall disposed across a central part of the upper end of the hydrocyclone separator, to define an outflow area surrounding the blocking wall, between the blocking wall and the sidewall of the hydrocyclone separator;
   a filtration component in the form of a basket, the basket having an open end facing the upper end of the hydrocyclone separator, and the basket having mesh sidewall(s); and
   an outlet from the separation device for discharging fluid from outside the mesh sidewall(s) of the basket and returning the fluid to the central heating and/or cooling system circuit.
2. A separator as set out in clause 1, in which the inlet to the hydrocyclone is positioned to one side of the housing.
3. A separator as set out in clause 1 or clause 2, in which the apertures in the mesh are between 200 and 400 microns in diameter.
4. A separator as set out in any preceding clause, in which a hollow housing is provided and the hydrocyclone is provided in the form of an insert disposed inside the housing.
5. A separator as set out in clause 4, in which the hydrocyclone insert is provided with a skirt that surrounds the conical hydrocyclone.
6. A separator as set out in any preceding clause, in which a drain valve is provided at the base of the separator device for draining fluid and sediment from the separator device.
7. A separator as set out in any preceding clause, in which a bleed valve is provided for releasing pressure from within the separator device.
8. A separator as set out in any preceding clause, in which the blocking wall is provided as a wall on the underside of a protrusion which extends into the housing in the path of fluid flow.
9. A separator as set out in clause 8, in which the protrusion includes a magnetic element.
10. A separator as set out in clause 9, in which the protrusion is in the form of a sheath around the magnetic element and forms part of the pressure envelope of the separator device.
11. A separator as set out in clause 9 or clause 10, in which the magnetic element comprises magnetic billets that are arranged with like poles facing each other along a cylindrical rod.
12. A separator as set out in any of clauses 9 to 11, in which the magnetic element is provided with a handle at the top of the magnetic element for easy removal.
13. A separator as set out in any preceding clause, in which a wall is provided in the form of an inwardly extending flange around the upper end of the hydrocyclone separator to meet with the mesh basket above.
14. A separator as set out in any preceding clause, in which the mesh basket is substantially cylindrical.
15. A separator as set out in any preceding clause, in which the sediment collection region is wider than the base of the hydrocyclone.
16. A method of removing suspended particles from a central heating and/or cooling system, the method comprising providing a separator device in the heating and/or cooling system circuit according to any of the previous clauses.
17. A method as set out in clause 16, in which the separator device is provided on the return pipe to the boiler.
18. A separator device for removing suspended particles from central heating and/or cooling system fluid in a central heating and/or cooling system circuit, the separator device comprising:
   a housing, having an inlet and an outlet for connecting to the central heating system circuit, a fluid flow region within the housing, and an aperture in the housing for receiving a removable magnet pocket;
   a removable magnet pocket in the form of a hollow tube with a first closed end and a second open end, the first end being insertable into the fluid flow region in the housing via the aperture in the housing and the second end remaining outside the housing;
   an attachment means for releasably fixing the magnet pocket to the housing and sealing between the magnet pocket and the housing; and
   a magnetic element which is insertable into and removable from the magnet pocket through the open end of the magnet pocket, while the magnet pocket is fixed and sealed to the housing.
19. A separator device as set out in clause 18, in which the aperture is disposed in a lid to the housing.
20. A separator device as set out in clause 18 or clause 19, in which the portion of the magnet pocket positioned inside the housing has thicker support bars and thinner areas between the bars.
21. A separator device as set out in any of clauses 18 to 20, in which a handle is provided on one end of the magnetic element.
22. A separator device as set out in any of clauses 18 to 21, in which the attachment means include screw threads surrounding the second end of the magnet pocket, and corresponding screw threads surrounding the aperture in the housing.
23. A fitment for connecting a separator device to a pipe of the central heating and/or cooling system, the fitment comprising:
   a body in the form of a tee;
   a first aperture for an inlet pipe and a second aperture for an outlet pipe, the first and second apertures facing away from each other and being disposed in line with each other;
   a concentric inlet and outlet disposed on a perpendicular arm of the tee and insertable into a separator device;
   at least one valve provided in the body of the fitment, for controlling the flow of fluid to and/or from the connected separator device; and
   a first adaptor connected to the first aperture and a second adaptor connected to the second aperture, each adaptor being connected to the body of the fitment via a screw thread, and having a face which abuts a corresponding face of the body when the adaptor is connected to the body, the adaptors connecting the fitment to the inlet and outlet pipes;
   in which the faces of the fitment apertures include angulations in the form of ratchet teeth, and the corresponding faces of the body of the fitment also include angulations in the form of ratchet teeth.
24. A fitment as set out in clause 23, in which the teeth on at least one of the adaptor and fitment aperture are resiliently deformable.
25. A fitment as set out in clause 23 or clause 24, in which the adaptors are screwed into the fitment by left-handed screw threads.

## Claims

1. A separator device for removing suspended particles from central heating and/or cooling system fluid in a central heating and/or cooling system circuit, the separator device comprising:
a housing, having an inlet and an outlet for connecting to the central heating system circuit, a fluid flow region within the housing, and an aperture in the housing for receiving a removable magnet pocket;
a removable magnet pocket in the form of a hollow tube with a first closed end and a second open end, the first end being insertable into the fluid flow region in the housing via the aperture in the housing and the second end remaining outside the housing;
an attachment means for releasably fixing the magnet pocket to the housing and sealing between the magnet pocket and the housing; and
a magnetic element which is insertable into and removable from the magnet pocket through the open end of the magnet pocket, while the magnet pocket is fixed and sealed to the housing.

2. A separator device as claimed in claim 1, in which the aperture is disposed in a lid to the housing.

3. A separator device as claimed in claim 1 or claim 2, in which the portion of the magnet pocket positioned inside the housing has thicker support bars and thinner areas between the bars.

4. A separator device as claimed in any of the preceding claims, in which a handle is provided on one end of the magnetic element.

5. A separator device as claimed in any of the preceding claims, in which the attachment means include screw threads surrounding the second end of the magnet pocket, and corresponding screw threads surrounding the aperture in the housing.

6. A separator device as claimed in claim 5, in which a slot is provided through the screw thread, for allowing the magnet pocket to be used as a bleed valve when partially unscrewed but retained in the aperture of the housing.

7. A separator device as claimed in any of the preceding claims, in which an eye is provided in the magnetic element, and a corresponding eye is provided in at least one of the magnet pocket and the separator housing, for retaining the magnetic element in the pocket when installed.

8. A separator device as claimed in any of the preceding claims, in which a slot and key arrangement is provided between the magnetic element and the magnet pocket, for fixing the orientation of the magnetic element when installed in the magnet pocket.
